# EUROPÄISCHE PATENTANMELDUNG

(11) **EP 3 026 896 A1**
(43) Veröffentlichungstag der Anmeldung: **01.06.2016**
(21) Anmeldenummer: 15195833.7
(22) Anmeldetag: 23.11.2015
(51) Int. Cl.: H04N 5/76, G11B 27/10, H04N 5/765, H04N 5/775, H04N 7/16, H04N 5/91

(54) **AUFZEICHNUNG UND ZEITVERSETZTE WIEDERGABE MEDIALER BEITRÄGE**

(30) Priorität: 29.11.2014 DE 102014117567
(71) Anmelder: Deutsche Telekom AG, 53113 Bonn (DE)
(72) Erfinder: RUNGE, Fred, 15806 Wünsdorf (DE); KERN, Michael, 10777 Berlin (DE)
(74) Vertreter: Brandt & Nern Patentanwälte

(57) **Zusammenfassung**

Die Erfindung bezieht sich auf die Aufzeichnung von mindestens einer Programmquelle (1) ausgesendeter medialer Beiträge und auf die zeitversetzte Wiedergabe eines solchen, in einem dafür reservierten Speicherbereich (4) aufgezeichneten und von einer dazu ausgebildeten Endgeräteanordnung (2) empfangenen Beitrags. Gemäß der vorgeschlagenen Lösung wird das von der mindestens einen Programmquelle (1) als medialer Datenstrom ausgesendete Programm, unabhängig davon, ob diese Programmquelle (1) augenblicklich zur Wiedergabe des von ihr ausgesendeten Programms ausgewählt ist und unabhängig von weiteren Bedienhandlungen eines Nutzers der Endgeräteanordnung (2), durch Speichern in dem dafür reservierten, als FIFO-Speicher organisierten Speicherbereich (4) permanent oder beginnend mit einem Einschaltmoment der Endgeräteanordnung (2) aufgezeichnet. Ein zum Zeitpunkt einer mittels der Endgeräteanordnung (2) erfolgenden Auswahl der mindestens einen Programmquelle (1) zur Wiedergabe ihres Programms bereits laufender medialer Beitrag wird durch die Endgeräteanordnung (2), unabhängig vom Zeitpunkt dieser Auswahl, zur zeitversetzten Wiedergabe ab dem Beitragsbeginn, zumindest aber ab einem frühesten in dem reservierten Speicherbereich (4) verfügbaren Zeitpunkt bereitgestellt.

## Beschreibung

Die Erfindung bezieht sich auf eine Lösung zur Aufzeichnung und zeitversetzten Wiedergabe von medialen Beiträgen, welche durch entsprechende Contentanbieter auf terrestrischem Wege, via Satellit oder über ein Netzwerk, beispielsweise als Livestream über das Internet, bereitgestellt und durch eine Programmquelle ausgesendet werden. Bei den medialen Beiträgen kann es sich in diesem Zusammenhang sowohl um Audiobeiträge, wie beispielsweise um Musikstücke, Konzertmitschnitte oder Hörspielbeiträge, als auch um Videobeträge, wie beispielsweise Filme, Magazinsendungen, Unterhaltungssendungen und dergleichen handeln. Die zur Aufzeichnung und zeitversetzten Wiedergabe solcher Beiträge vorgestellte Lösung betrifft ein Verfahren und ein zu dessen Durchführung geeignetes System. Gegenstand ist ferner ein Endgerät zur lokalen Aufzeichnung von medialen Beiträgen und zu deren zeitversetzter Wiedergabe.

Lösungen zur Aufzeichnung medialer Inhalte beziehungsweise Beiträge zum Zwecke ihrer zeitversetzten Wiedergabe, welche auch dem Privatanwender zur Verfügung stehen, sind bereits seit längerem bekannt. Hierbei führte die Fortentwicklung oder gegebenenfalls auch parallele Entwicklung solcher Lösungen beispielsweise vom Kassettenrecorder zur Aufnahme von Musik und Sprache, über den Videorecorder zur Aufzeichnung von Filmen und anderen Videobeiträgen, bis hin zum Festplattenreceiver, bei welchem mediale Inhalte zum Zweck ihrer späteren Wiedergabe auf einer Festplatte (HDD) oder neuerdings auch in einem Halbleiterspeicher in Form einer SSD (Solid State Disc) aufgezeichnet werden können.

Insbesondere im Zusammenhang mit der Entwicklung der letztgenannten Gerätekategorie sind auch Lösungen bekannt geworden, welche es dem Nutzer, wie beispielsweise dem Privat- beziehungsweise Heimanwender ermöglichen, einen durch einen Sender ausgestrahlten Medienbeitrag aufzuzeichnen und diesen Medienbeitrag zeitversetzt wiederzugeben, während dessen Aufzeichnung noch weiter fortgesetzt wird. Derartige Lösungen für die zeitversetzte Wiedergabe von Medienbeiträgen sind unter der Bezeichnung Timeshift bekannt geworden.

Endgeräte, welche eine derartige Timeshift-Funktion bereitstellen, ermöglichen es dem Nutzer, während des Konsumierens eines von einem Sender ausgesendeten Medienbeitrages, beispielsweise beim Ansehen eines Videobeitrages, eine häufig als Pausentaste bezeichnete beziehungsweise symbolisierte Taste zu betätigen und somit das laufende Programm beziehungsweise die Wiedergabe des Beitrages scheinbar für längere Zeit zu unterbrechen. Tatsächlich wird jedoch der wiedergegebene mediale Beitrag, beginnend mit dem Zeitpunkt der Betätigung der vorgenannten Pausentaste, in dem die Timeshift-Funktion zur Verfügung stellenden Endgerät auf einem geeigneten Speichermedium (beispielsweise auf einer Festplatte) aufgezeichnet und kann später durch erneute Betätigung der vorgenannten Taste oder einer anderen die Pausenfunktion aufhebenden Taste ab dem Zeitpunkt der scheinbaren Unterbrechung wiedergegeben werden. Darüber hinaus ist es dem Nutzer möglich, sich innerhalb der bereits aufgezeichneten Sequenz des Beitrages beliebig vorwärts und rückwärts zu bewegen oder die Wiedergabe erneut zu unterbrechen, sofern entsprechende Funktionen durch die Contentanbieter nicht, insbesondere zum Zweck der Vermarktung von Werbung gesperrt werden.

Während Endgeräte, die in der zuvor beschriebenen Weise arbeiten, noch die Betätigung einer speziellen Taste (Pausentaste oder dergleichen) erfordern, um die Aufzeichnung eines laufenden Beitrags zu initiieren, sind zwischenzeitlich auch Gerätekonzepte bekannt geworden, bei denen dies nicht erforderlich ist. Bei derartigen Endgeräten wird die Aufzeichnung eines laufenden Beitrags vielmehr durch unterschiedliche, von dem Nutzer unabhängig von einer willentlichen Aufzeichnung eines Beitrags getätigte Bedienhandlungen initiiert. Der Start der Aufzeichnung eines medialen Beitrags, nämlich der Aufzeichnung eines aktuell laufenden Programms, erfolgt dabei insbesondere im Moment des Einschaltens des Gerätes und der dadurch bewirkten Ausgabe des aktuellen Programms des mit dem Gerät zuletzt genutzten Senders (beziehungsweise der zuletzt genutzten Programmquelle) oder aufgrund des Umschaltens von einem Sender/einer Programmquelle zu einem/einer anderen. Ohne, dass der Nutzer sich dies bewusst machen muss, wird also durch das Einschalten des Endgeräts oder durch das Umschalten des Senders die Aufnahme des jeweils laufenden Programms des aktuell ausgewählten Senders gestartet und der Nutzer in die Lage versetzt, dieses Programm durch ein ebenfalls durch Betätigung entsprechender Bedienelemente bewirktes Bewegen innerhalb der bereits aufgezeichneten Sequenz dieses Programms den betreffenden Beitrag zeitversetzt wiederzugeben. Auch hierbei wird indes während der zeitversetzten Wiedergabe eines Beitrags das betreffende Programm weiterhin aufgezeichnet.

Der maximal mögliche Zeitversatz zwischen aktuell ausgesendetem Programm und aufgezeichneten Programmteilen wird durch die Größe des für diese Art der Aufzeichnung vom Gerät bereitgestellten Speichers bestimmt. Selbstverständlich ist insoweit aufgrund der Notwendigkeit eines solchen Speichers mit einer in jedem Falle gegebenen Endlichkeit seiner Größe immer eine Limitierung gegeben. Unabhängig von diesem nicht außer Kraft zu setzenden Umstand haftet aber den vorgenannten Lösungen der Nachteil an, dass ein von einer Programmquelle/einem Sender als Teil eines Programms ausgesendeter medialer Beitrag, erst beginnend mit dem Zeitpunkt zeitversetzt wiedergegeben werden kann, an dem die betreffende Programmquelle zur Wiedergabe ihres Programms ausgewählt wird. Es ist dabei nicht möglich, auch weiter in der Vergangenheit liegende Teile eines bei der Auswahl einer Programmquelle bereits laufenden medialen Beitrags zeitversetzt wiederzugeben.

Aufgabe der Erfindung ist es, die vorgenannten Nachteile zu vermeiden und eine insoweit komfortablere Lösung zur Aufzeichnung und zeitversetzten Wiedergabe medialer Beiträge zur Verfügung zu stellen. Hierzu sind ein Verfahren und ein zu dessen Durchführung geeignetes System anzugeben. Ferner soll durch die Erfindung eine zur Durchführung des Verfahrens geeignete Endgeräteanordnung bereitgestellt werden, bei welcher die Aufzeichnung entsprechender medialer Beiträge lokal in diesem Endgerät erfolgt.

Die Aufgabe wird durch in Verfahren mit den Merkmalen des Patentanspruchs 1 gelöst. Ein die Aufgabe lösendes, zur Durchführung des Verfahrens geeignetes System ist durch den ersten Sachanspruch charakterisiert. Darüber hinaus wird die Aufgabe durch eine Endgeräteanordnung entsprechend dem nebengeordneten unabhängigen Sachanspruch gelöst. Vorteilhafte Aus- und Weiterbildungen der Erfindung sind durch die jeweiligen Unteransprüche gegeben.

Entsprechend der Aufgabe bezieht sich die vorgeschlagene Lösung auf ein Verfahren zur Aufzeichnung von medialen Beiträgen, die von mindestens einer Programmquelle ausgesendet werden, und zur zeitversetzen Wiedergabe eines derartigen, in einem dafür reservierten Speicherbereich aufgezeichneten und von einer dazu ausgebildeten Endgeräteanordnung empfangenen Beitrags. Ein solcher Beitrag ist dabei ein Teil des von der betreffenden Programmquelle in Form eines medialen Datenstroms, also eines aus medialen Daten bestehenden Datenstroms, ausgesendeten Programms.

Das Verfahren ist so gestaltet, dass ein von der vorgenannten mindestens einen Programmquelle ausgesendeter Beitrag, welcher zum Zeitpunkt der Auswahl dieser Programmquelle zur Wiedergabe ihres Programms bereits läuft, durch die Endgeräteanordnung zur zeitversetzten Wiedergabe ab dem während der Programmaufzeichnung detektierten Beitragsbeginn, zumindest aber ab einem frühesten in dem für die Programmaufzeichnung reservierten Speicherbereich verfügbaren, jedenfalls vom Zeitpunkt der Auswahl der betreffenden Programmquelle unabhängigen Zeitpunkt bereitgestellt wird. Hierbei ist das Verfahren so ausgerichtet, dass die Wiedergabe eines solchen, bei der Auswahl der entsprechenden Programmquelle bereits laufenden Beitrags vorzugsweise ab dem Beginn des betreffenden Beitrags ermöglicht ist, der Beitrag also zu Wiedergabe ab seinem Beginn bereitgestellt wird. Bereitgestellt meint, dass die grundsätzliche Möglichkeit gegeben ist, einen Beitrag von Beginn an oder ab einem frühesten verfügbaren Zeitpunkt wiederzugegeben, aber natürlich zur Auslösung einer solchen Wiedergabe eine Bedienhandlung des Nutzers der Endgeräteeinrichtung erfolgen muss. Hingegen erfolgt die Aufzeichnung des Programms beziehungsweise medialer Beiträge der mindestens einen Programmquelle unabhängig von einer (weiteren) Bedienhandlung des Nutzers automatisiert.

Die genannte Einschränkung, wonach im Ausnahmefall die Wiedergabe des Beitrags nicht ab dessen Beginn, sondern zu einem anderen, frühestens in dem reservierten Speicherbereich verfügbaren Zeitpunkt bereitgestellt wird, hat hierbei mehrere Gründe, welche zumindest teilweise erst im Zusammenhang mit der Beschreibung unterschiedlicher Ausbildungsformen der Erfindung an späterer Stelle erläutert werden sollen. An dieser Stelle sei lediglich darauf hingewiesen, dass ein für die Speicherung eines ein Programm repräsentierenden medialen Datenstroms reservierter Speicherbereich selbstverständlich hinsichtlich seiner Größe stets endlich, also beschränkt ist. Ein solcher Speicherbereich wird vorzugsweise als FIFO-Speicher (First In / First Out) organisiert. Der betreffende Speicherbereich ist im Falle seiner Organisation als FIFO-Speicher aus logischer Sicht als Ringspeicher beziehungsweise Ringpuffer aufzufassen. Wird dabei im Zuge des Aufzeichnungsvorgangs eines Programms das (logische) Ende des reservierten Speicherbereichs erreicht, so wird die Aufzeichnung am Beginn des Speicherbereichs fortgesetzt, wobei dort zuvor gespeicherte Programminhalte beziehungsweise Teile des medialen Datenstroms wieder überschrieben werden.

Aufgrund der angesprochenen endlichen Größe des für die Aufzeichnung reservierten Speicherbereichs kann es geschehen, dass bei der Aufzeichnung eines sehr langen medialen Beitrags, dessen zuerst aufgezeichneten, den Beitragsbeginn umfassenden Teile wieder überschrieben werden. In diesem Falle ist selbstverständlich eine Wiedergabe des Beitrags ab dessen Beginn nicht mehr möglich. Gleichwohl können, dem Grundgedanken der Erfindung folgend, dennoch Teile des Beitrags zeitversetzt wiedergegeben werden, welche von einer beziehungsweise der mindestens einen Programmquelle bereits ausgesendet wurden, als diese durch den Nutzer der Endgeräteanordnung noch nicht aktuell für die Wiedergabe des von ihr ausgesendeten Programms ausgewählt war, also bevor der Nutzer beispielsweise auf einen den Beitrag aussendenden terrestrischen Sender als Programmquelle umgeschaltet hat. Abgesehen von der zuvor erläuterten möglichen Ausnahme ist die vorgeschlagene Lösung jedoch darauf ausgelegt, die zeitversetzte Wiedergabe eines Beitrags ab dessen Beginn zu ermöglichen.

Bei der mindestens einen Programmquelle kann es sich beispielsweise um Einrichtungen eines terrestrisch übertragene Programminhalte abstrahlenden Senders, eines Rundfunksenders oder um einen Streamingdienst handeln, der Programminhalte über ein Netzwerk, wie das Internet, verbreitet. Selbstverständlich sind auch weitere, andere Übertragungsmedien nutzende Programmquellen und Übertragungsverfahren, wie beispielsweise die Satellitenübertragung oder das Kabelfernsehen und dergleichen, von der Erfindung umfasst.

Soweit vorstehend und in den Patentansprüchen von der Aufzeichnung des Programms beziehungsweise der zeitversetzten Wiedergabe medialer Beiträge mindestens einer Programmquelle die Rede ist, hebt dies darauf ab, dass das erfindungsgemäße Verfahren, aber insbesondere das später noch darzustellende System vorzugsweise eine Aufzeichnung und zeitversetzte Wiedergabe medialer Beiträge mehrerer Programmquellen ermöglicht. Die Aufzeichnung der Programme mehrerer Programmquellen erfolgt dabei parallel und insoweit gewissermaßen im Hintergrund, als sie unabhängig davon erfolgt, ob augenblicklich überhaupt eine Programmquelle zur Wiedergabe des von ihr ausgesendeten Programms ausgewählt ist und, sofern eine Programmquelle ausgewählt ist, unabhängig davon, welche Programmquelle dies ist. Hierbei ist je Programmquelle, deren Programm aufgezeichnet wird, ein entsprechender für die Aufzeichnung reservierter Speicherbereich vorgesehen.

Die Aufzeichnung des Programms der mindestens einen Programmquelle kann dabei in Abhängigkeit der konkreten Ausbildung des Systems entweder lokal, das heißt in einem reservierten Speicherbereich erfolgen, der als Teil der später noch etwas genauer zu beschreibenden Endgeräteanordnung des Nutzers ausgebildet ist oder in einem reservierten Speicherbereich in technischen Einrichtungen eines Programmanbieters oder eines Anbieters einer entsprechenden Dienstleistung. Im letztgenannten Fall der nicht lokalen Anordnung des reservierten Speicherbereichs hat die Endgeräteanordnung auf betreffende Einrichtungen, deren Bestandteil ein solcher reservierter Speicherbereich ist, über ein Netzwerk, vorzugsweise über das Internet, Zugriff. Hierbei werden diese betreffenden Einrichtungen mittels der Endgeräteanordnung über das Netzwerk zur zeitversetzen Wiedergabe eines aufgezeichneten medialen Beitrags angesprochen und können darüber hinaus konfiguriert werden, etwa um festzulegen, für welche Programmquellen eine Aufzeichnung des Programms erfolgen soll.

Insbesondere im Fall der lokalen Aufzeichnung der Programme mehrerer Programmquellen wird deren Anzahl im Hinblick auf die schon angesprochene Endlichkeit des zur Verfügung stehenden Speichers vorzugsweise begrenzt sein. Entsprechende Programmquellen können dabei vorzugsweise durch den Nutzer mittels der Endgeräteanordnung in einem Konfigurationsvorgang als Favoriten festgelegt werden. Selbstverständlich können diese Favoriten in einem weiteren Konfigurationsvorgang gegebenenfalls auch durch andere ersetzt werden. Hierbei wird ein Speicherbereich, welcher für die Aufzeichnung des Programms einer danach nicht mehr zu den Favoriten gehörenden Programmquelle reserviert war und bereits mit Programminhalten der betreffenden Programmquelle beschrieben wurde, einfach mit dem Programm einer anderen, stattdessen den Favoriten hinzugefügten Programmquelle überschrieben. Zum Zweck der Reduzierung des zur Aufzeichnung der Programme mehrerer Programmquellen erforderlichen Speicherplatzbedarfs kann es dabei in Weiterbildung des Verfahrens vorgesehen sein, dass das Dateiformat des das Programm einer jeweiligen Programmquelle repräsentierenden Datenstroms im Zuge der Aufzeichnung in ein anderes Dateiformat umkodiert beziehungsweise konvertiert wird, dessen Aufzeichnung weniger Speicherplatz erfordert beziehungsweise, dass der aufzuzeichnende Datenstrom im Zuge der Aufzeichnung komprimiert wird.

Nach dem hier zugrunde gelegten Verständnis kann die Wiedergabe eines augenblicklich empfangenen Programms oder die zeitversetzte Wiedergabe medialer Beitrage je nach Konfiguration der dafür empfängerseitig zur Verfügung stehenden Technik mit Hilfe eines einzelnen Endgeräts (beispielsweise eines Fernsehers mit Empfangsmitteln beziehungsweise mit wenigstens einem Receiver und gegebenenfalls mit Mitteln zur Aufzeichnung empfangener Medienströme, wie zum Beispiel einer eigenen Festplatte) oder aber auch mit der Hilfe mehrerer miteinander interagierender Geräte (beispielsweise mit einem Festplattenreceiver gekoppelter Fernseher) erfolgen. Dies ist der Grund, warum im Weiteren und in den Patentansprüchen bezüglich der empfängerseitigen Technik nicht von einem Endgerät, sondern von einer Endgeräteanordnung gesprochen wird.

Entsprechend dem erfindungsgemäßen Verfahren wird das von der mindestens einen Programmquelle ausgesendete Programm durch Speichern des dieses Programm repräsentierenden medialen Datenstroms in dem schon erwähnten reservierten Speicherbereich unabhängig davon aufgezeichnet, ob und zu welchem Zeitpunkt die betreffende Programmquelle für die Wiedergabe des von ihr ausgesendeten Programms ausgewählt wird. Dabei erfolgt die Aufzeichnung des Programms in dem dafür reservierten Speicherbereich entweder permanent oder beginnend mit einem Einschaltmoment der zuvor angesprochenen Endgeräteanordnung.

Welche der beiden vorgenannten Alternativen bei der Nutzung der Erfindung umgesetzt wird, hängt dabei, wie noch zu zeigen sein wird, insbesondere davon ab, wo die Programmaufzeichnung erfolgt beziehungsweise wo der dafür vorgesehene reservierte Speicherbereich angeordnet ist. Insbesondere, sofern dieser Speicherbereich lokal, das heißt als Bestandteil der Endgeräteanordnung angeordnet ist, erfolgt die Aufzeichnung des Programms der mindestens einen Programmquelle möglicherweise (jedoch nicht zwingend) erst beginnend mit dem Zeitpunkt, zu welchem sich zumindest diese Endgeräteanordnung im Einschaltzustand befindet. Unter dem Einschaltmoment der Endgeräteanordnung soll in diesem Zusammenhang der Moment verstanden werden, in welchem die Endgeräteanordnung aufgrund einer entsprechenden Bedienhandlung eines Nutzers von einem Standby- beziehungsweise Bereitschaftszustand oder von einem Ausschaltzustand (die Endgeräteanordnung beziehungsweise das oder die zu ihr gehörenden Endgeräte sind stromlos) in einen Betriebszustand übergeht, in welchem die Wiedergabe medialer Beiträge ermöglicht ist. Mit Blick auf den bereits angesprochenen Festplattenreceiver heißt Letzteres aber nicht, dass in einem solchen Betriebszustand die beziehungsweise eine Programminhalte (mit einem oder mehreren gegebenenfalls erst später zeitversetzt wiederzugebenden medialen Beiträgen) aussendende Programmquelle im Einschaltzustand unmittelbar für die Wiedergabe ausgewählt ist. Vielmehr kann der Nutzer der Endgeräteanordnung diese vielleicht eingeschaltet haben, um - völlig ungeachtet der gerade laufenden Programme - bereits sehr viel früher aufgezeichnete Programminhalte wiederzugeben. Unabhängig davon beginnt aber bereits zu diesem Zeitpunkt, also im Moment des Einschaltens der Endgeräteanordnung, die Aufzeichnung des Programms mehrerer, beispielsweise im Rahmen eines Konfigurationsvorgangs als Favoriten festgelegter Programmquellen, aber zumindest einer Programmquelle, in einem für die jeweilige Programmquelle reservierten Speicherbereich.

Hierdurch hat der Nutzer, sofern er später diese (beziehungsweise eine dieser) Programmquelle(n) zur Wiedergabe des aktuellen Programms auswählt, also beispielsweise ein Empfangsgerät auf einen terrestrisch übertragenden Sender umschaltet, durch eine weitere Bedienhandlung die Möglichkeit, einen von dieser Programmquelle ausgesendeten, zum Zeitpunkt ihrer Auswahl bereits laufenden medialen Beitrag von Beginn an oder aber eben ab dem bereits angesprochenen früheren, in den reservierten Speicherbereich verfügbaren Zeitpunkt wiederzugeben. Nochmals zu betonen ist dabei, dass der zuletzt angesprochene, gegebenenfalls nicht mit dem Beitragsbeginn identische frühere Zeitpunkt in jedem Falle unabhängig vom Zeitpunkt der Auswahl der diesen Beitrag aussendenden Programmquelle respektive unabhängig vom Zeitpunkt des Umschaltens auf den den Beitrag ausstrahlenden Sender ist.

Auch im Falle einer lokalen, das heißt als Bestandteil der Endgeräteanordnung vorgesehenen Anordnung des reservierten Speicherbereichs kann aber eine Aufzeichnung des Programms und damit eine Aufzeichnung ausgesendeter Medienbeiträge der mindestens einen Programmquelle bereits vor dem Einschalten der Endgeräteanordnung erfolgen. Nämlich dann, wenn das Einschalten der Endgeräteanordnung (also deren Übergang in einen Betriebszustand) aus einem Standby-Zustand beziehungsweise aus dem Standby-Betrieb heraus erfolgt und eine Aufzeichnung, wie gemäß einer möglichen Ausbildungsform der Erfindung vorgesehen, auch im Standby-Betrieb der Endgeräteanordnung erfolgt. Voraussetzung hierfür ist lediglich, dass bestimmte für die Aufzeichnung und deren Steuerung erforderliche Einheiten und/oder Geräte der Endgeräteanordnung auch im Standby-Betrieb mit Strom versorgt werden.

Zur praktischen Umsetzung des zuvor beschriebenen Verfahrens wird bei der Aufzeichnung des Programms der mindestens einen Programmquelle, welche gemäß den vorstehenden Erläuterungen gewissermaßen im Hintergrund, nämlich jedenfalls unabhängig davon erfolgt, ob diese Programmquelle augenblicklich zur Wiedergabe ihres Programms ausgewählt ist, die jeweils augenblicklich mit dem medialen Datenstrom des aufgezeichneten Programms beschriebene Adresse des reservierten Speicherbereichs als aktuelle Schreibadresse in einem Zeigerspeicher vermerkt.

Demgemäß ist es weiterhin vorgesehen, dass bei der Programmaufzeichnung zur Erkennung eines Beitragsbeginns Merkmale ausgewertet werden, welche den Beginn eines Beitrags kennzeichnen. Hinsichtlich der Art der vorgenannten Merkmale sind unterschiedliche Ausprägungsformen der Erfindung möglich. Es kann sich hierbei um Zusatzinformationen (zum Beispiel RDS oder Videotext) handeln, welche dem Programm senderseitig beziehungsweise seitens der Programmquelle zur Kennzeichnung eines Beitragsbeginns hinzugefügt werden. Denkbar ist es darüber hinaus aber auch, dass die Endgeräteanordnung über Einheiten verfügt, welche insoweit smart ausgebildet sind, als dass diese aufgrund der Verarbeitung einer speziellen Software anhand der empfangenen Sequenzen des medialen Datenstroms den Anfang medialer Inhalte gewissermaßen in selbstlernender Weise selbsttägig erkennen. Insoweit sei darauf hingewiesen, dass am Markt bereits Geräte verfügbar sind, welche mit vergleichsweise hoher Zuverlässigkeit Werbepausen in einem Programm erkennen.

Das erfindungsgemäße Verfahren ist entsprechend einer möglichen Ausbildungsform seiner wie vorstehend dargestellt erfolgenden praktischen Umsetzung weiterhin dadurch ausgestaltet, dass im Falle dessen, dass bei der Aufzeichnung des Programms der mindestens einen Programmquelle ein Beitragsbeginn erkannt wird, die aktuellen Schreibadresse, also diejenige Adresse des reservierten Speichers, die augenblicklich mit dem aufgezeichneten medialen Datenstrom beschrieben wird, in einen speziellen Adressspeicher kopiert wird. Entsprechend einer alternativ vorgesehenen Verfahrensgestaltung wird im Falle der Erkennung eines Beitragsbeginns ein entsprechendes Anfangskennzeichen zusammen mit dem aufgezeichneten Programminhalt, genauer gesagt unter der, auf die im Zeigerspeicher vermerkte aktuelle Schreibadresse folgenden Adresse, also vor der auf den Beitragsbeginn folgenden Programmsequenz, in dem reservierten Speicherbereich gespeichert.

Im erstgenannten Fall, also im Fall der Speicherung der Anfangsadresse eines medialen Beitrags in einem Adressspeicher, wird jedenfalls eine in diesem Adressspeicher zu einem Beitragsanfang vermerkte Adresse aus diesem wieder entfernt, sofern die aktuelle Schreibadresse des ja in jedem Falle zwischenzeitlich fortgesetzten Aufzeichnungsvorgangs, aufgrund der Eigenschaft des reservierten Speicherbereichs als FIFO-Speicher beziehungsweise Ringspeicher, erneut mit der als Anfangsadresse vermerkten Speicheradresse übereinstimmt. Dies entspricht dem Fall, dass ein aufgezeichneter Beitrag sehr lang ist, so dass der Beitragsanfang während des Aufzeichnungsvorgangs in dem reservierten Speicherbereich wieder überschrieben wird und damit aus diesem heraus nicht mehr für eine zeitversetzte Wiedergabe aus dem reservierten Speicherbereich heraus zur Verfügung steht.

Vergleichbares gilt für die alternative Verfahrensgestaltung, gemäß welcher die Anfangsadresse nicht in einem Adressspeicher vermerkt, sondern in dem der Programmaufzeichnung dienenden reservierten Speicherbereich innerhalb des aufgezeichneten medialen Datenstroms ein Anfangskennzeichen abgelegt wird. Hierbei wird dieses Anfangskennzeichen mit Daten des aufgezeichneten medialen Datenstroms überschrieben, sofern die Aufzeichnung noch andauert, wenn der reservierte Speicherbereich bereits vollständig beschrieben wurde, ohne dass die den Beitragsbeginn repräsentierenden Sequenzen des aufgezeichneten medialen Datenstroms zwischenzeitlich aus diesem Speicherbereich für eine zeitversetzte Wiedergabe des Beitrags wieder ausgelesen worden wären.

Je nachdem, ob gemäß den vorstehenden Ausführungen die Adresse eines Beitragsbeginns in einem dafür vorgesehenen Adressspeicher vermerkt oder zusammen mit dem aufgezeichneten medialen Datenstrom eines Programms beim Erkennen eines Beitragsbeginns ein entsprechendes Kennzeichen in dem reservierten Speicherbereich vermerkt wird, gestaltet sich der weitere Verfahrensablauf dann wie folgt. Nach Ausführung einer dafür vorgesehenen Bedienhandlung an der Endgeräteanordnung durch einen Nutzer wird von der Endgeräteanordnung ein von der zu diesem Zeitpunkt ausgewählten Programmquelle ausgesendeter Beitrag im erstgenannten Fall ab der im Adressspeicher für den Beitragsanfang vermerkten Adresse oder, entsprechend der zweiten Alternative, ab der der Speicheradresse mit dem (zuletzt) für einen Beitragsbeginn abgelegten Kennzeichen folgenden Speicheradresse wiedergegeben.

Sofern eine Adresse für einen Beitragsbeginn in dem dafür vorgesehenen Adressspeicher nicht oder nicht mehr vermerkt ist oder, im Falle der alternativ vorgesehenen Aufzeichnung entsprechender Kennzeichen zusammen mit dem Medienstrom, derartige Kennzeichen in dem reservierten Speicherbereich nicht vorhanden und in Folge dessen mittels einer entsprechenden Einheit nicht detektierbar sind, erfolgt die Wiedergabe des aufgezeichneten Programms ab der auf die im Zeigerspeicher vermerkte aktuelle Schreibadresse folgenden, im Zuge des aktuellen Aufzeichnungsvorgangs beschriebenen Adresse des reservierten Speicherbereichs. In dem Fall, dass eine Adresse für einen Beitragsbeginn noch nicht vermerkt oder ein Anfangskennzeichen noch nicht abgespeichert wurde, weil seit dem Beginn der Aufzeichnung noch kein (neuer) Beitrag begonnen hat, handelt es sich bei der vorgenannten Adresse um die Adresse des Aufzeichnungsbeginns (nicht des Beitragsbeginns), jedenfalls sofern die Aufzeichnung noch nicht so lange andauert, dass bereits der gesamte reservierte Speicherbereich (im Zuge der aktuell erfolgenden) Aufzeichnung beschrieben worden wäre. Früher in dem hinsichtlich der aktuellen Aufzeichnung freien Abschnitt des reservierten Speicherbereichs bereits aufgezeichnete Inhalte bleiben insoweit außer Betracht.

Unabhängig von der Auswahl eines Beitrags zur zeitversetzten Wiedergabe und unabhängig von der Art und Weise des Vermerkens eines Beitragsbeginns (als Adresse im Adressspeicher oder als Kennzeichen zusammen mit dem medialen Datenstrom in dem reservierten Speicherbereich) wird der Aufzeichnungsvorgang, das heißt die Aufzeichnung des von der jetzt ausgewählten Programmquelle ausgesendeten Programms, auch nach der durch den Nutzer erfolgenden Anforderung eines Beitrags zur zeitversetzten Wiedergabe weiter fortgesetzt. Dies gilt auch für den Fall, dass die zeitversetzte Wiedergabe unterbrochen oder die Auswahl der Programmquelle beispielsweise durch Auswahl einer gegebenenfalls vorhandenen anderen Programmquelle zur Wiedergabe ihres augenblicklich ausgesendeten Programms wieder aufgehoben wird.

Aus praktischen Gründen kann das Verfahren so gestaltet sein, dass in dem als FIFO-Speicher, also als Ringpuffer organisierten reservierten Speicherbereich durch eine die Programmaufzeichnung und zeitversetzte Wiedergabe von Beiträgen steuernde Kombination aus Steuereinrichtung und Software auch maximal zwei Beiträge so verwaltet werden, dass ein Beitrag noch für eine definierte Verzögerungszeit nach Beginn des Folgebeitrages zur Verfügung steht.

In Weiterbildung des erfindungsgemäßen Verfahrens kann dieses darüber hinaus auch so gestaltet sein, dass einem Nutzer der Endgeräteanordnung bei der Auswahl einer Programmquelle grundsätzlich nicht nur die zeitversetzte Wiedergabe eines gegebenenfalls gerade laufenden medialen Beitrags, sondern die Wiedergabe mehrerer bereits zuvor in dem reservierten Speicherbereich aufgezeichneter Beiträge ermöglicht ist. Bei der Verfahrensvariante, wonach für einen erkannten Beitragsbeginn die in dem Zeigerspeicher gehaltene augenblickliche Schreibadresse des Aufzeichnungsvorgangs in einem Adressspeicher vermerkt wird, ist der vorgenannte Adressspeicher demgemäß zur Aufnahme mehrerer, innerhalb des reservierten Speicherbereichs zur Programmaufzeichnung jeweils auf einen Beitragsbeginn verweisender Speicheradressen ausgebildet. Der Adressspeicher ist hierbei ebenfalls als FIFO-Speicher organisiert.

Die Auswahl eines Beitrags von mehreren aufgezeichneten Beiträgen für die zeitversetzte Wiedergabe kann dabei durch jeweils spezielle, menügeführt unterstützte Bedienhandlungen oder durch mehrfache Ausführung der im Zusammenhang mit der zeitversetzten Wiedergabe des aktuell laufenden Beitrags schon angesprochenen Bedienhandlung ermöglicht werden.

Darüber hinaus kann es in Weiterbildung des Verfahrens vorgesehenen sein, dass es dem Nutzer der Endgeräteanordnung mittels zusätzlicher Bedienelemente oder Bedienhandlungen ermöglicht ist, Beiträge des laufenden Programms oder zeitversetzt wiedergegebene Beiträge für eine spätere erneute Wiedergabe in einem dafür vorgesehenen zusätzlichen Speicher zu archivieren.

Ergänzend sei an dieser Stelle darauf hingewiesen, dass es ebenfalls vorgesehen sein kann, sowohl den Anfang medialer Beiträge als auch deren Ende zu erkennen und demgemäß in dem Adressspeicher für einen jeweiligen Beitrag eine Anfangs- und eine Endadresse zu vermerken beziehungsweise innerhalb des aufgezeichneten medialen Datenstroms in dem reservierten Speicherbereich ein Anfangs- und ein Endekennzeichen zu vermerken. Bei den später und in den Ansprüchen im Zusammenhang mit der Darstellung des Systems beziehungsweise der Endgeräteanordnung angesprochenen Mitteln zur Erkennung eines Beitragsbeginns handelt es sich dann folglich um Mittel zur Anfangs- und Endeerkennung. Eine solche Vorgehensweise kann zum Beispiel sinnvoll sein, wenn bei dem aufgezeichneten medialen Datenstrom eine strikte Unterscheidung zwischen konkreten Beiträgen und beispielsweise Werbeblöcken möglich sein soll.

Die bereits mehrfach angesprochene Bedienhandlung, durch welche ein Nutzer der Endgeräteanordnung die zeitversetzte Wiedergabe eines als Bestandteil des aufgezeichneten Programms gespeicherten Beitrags bewirkt, kann je nach dem Konzept der Endgeräteanordnung beziehungsweise der einzelnen Geräte dieser Anordnung sehr unterschiedlich sein. So kann eine zeitversetzte Wiedergabe eines medialen Beitrags beispielsweise durch das Betätigen einer bestimmten Taste oder Tastenkombination auf einer Fernbedienung für die Endgeräteanordnung oder eines der Geräte dieser Anordnung, durch entsprechende Sprachkommandos oder durch die Betätigung eines auf einem Bildschirm dargestellten Icons durch einen Mausklick oder durch die Berührung eines in diesem Falle berührungsempfindlich ausgebildeten Displays der Endgeräteanordnung erfolgen. Darüber hinaus kann eine Gestensteuerung im Wege der Erfassung von Bewegungen des Nutzers mittels mindestens einer Kamera oder eines in eine Fernbedienung beziehungsweise eines als Fernbedienung genutzten Smartphones angeordneten Beschleunigungs- beziehungsweise Bewegungssensors vorgesehen sein.

Ein die Aufgabe lösendes, zur Durchführung des zuvor dargestellten Verfahrens geeignetes System zur Aufzeichnung und zeitversetzten Wiedergabe medialer Beiträge besteht aus mindestens einer Programmquelle zur Aussendung eines Programms mit medialen Beiträgen, aus Mitteln zur Aufzeichnung des von der mindestens einen Programmquelle ausgesendeten Programms und aus einer Endgeräteanordnung, welche Bedienelemente, Mittel zum Empfang des von der mindestens einen Programmquelle ausgesendeten medialen Datenstroms sowie Mittel zur unmittelbaren oder zeitversetzten akustischen und/oder visuellen Wiedergabe in diesem medialen Datenstrom enthaltener medialer Beiträge aufweist.

Korrespondierend mit einer voranstehend erläuterten praxisgerechten Ausgestaltung des Verfahrens umfasst das betreffende System weiterhin mindestens Speichermittel mit einem reservierten Speicherbereich für eine, zumindest im Einschaltzustand oder im Standby-Zustand der Endgeräteanordnung, von Bedienungshandlungen eines Nutzers der Endgeräteanordnung und von der augenblicklich zur Programmwiedergabe ausgewählten Programmquelle unabhängige Aufzeichnung des von der eingangs genannten mindestens einen Programmquelle ausgesendeten Programms. Das System umfasst ferner einen Zeigerspeicher zur Speicherung der jeweils augenblicklich mit dem medialen Datenstrom beschriebenen Adresse des vorgenannten reservierten Speicherbereichs, Mittel zur Erkennung des Beginns eines medialen Beitrags (gegebenenfalls auch zur Erkennung eines Beitragsendes) sowie einen Adressspeicher zur Speicherung mindestens einer Speicheradresse (eines mit dem Beginn eines Beitrags beschriebenen Speicherortes) des für die Programmaufzeichnung reservierten Speicherbereichs. Dabei sind die Mittel zur Erkennung eines Beitragsbeginns mittels einer Steuereinrichtung und eine von dieser verarbeiteten Software (Programmanwendung) realisiert, durch welche auch das Zusammenwirken der vorgenannten Mittel und Speicher des Systems gesteuert wird.

Der für die Programmaufzeichnung der mindestens einen Programmquelle reservierte Speicherbereich ist dabei, wie bereits zum Verfahren ausgeführt, als ein FIFO-Speicher organisiert. Bei dem Zeigerspeicher kann es sich um einen Teil des Arbeitsspeichers oder um ein Register des erfindungsgemäßen Systems beziehungsweise ein Register einer CPU seiner Steuereinrichtung handeln. Die Mittel zur Erkennung des Beginns eines medialen Beitrags durch Auswertung eines solchen Beitragsbeginn innerhalb des aufgezeichneten Programms kennzeichnender Merkmale sind, wie bereits ausgeführt, durch eine Kombination von Soft- und Hardware ausgebildet. Dabei werden zur Erkennung des Beginns einzelner Beiträge durch eine von der Steuereinrichtung des Systems als Teil der genannten Software verarbeitete Programmroutine beispielsweise Informationen verarbeitet, welche durch die das aufgezeichnete Programm aussendende Programmquelle zusätzlich ausgesendet werden. Denkbar ist es aber auch, dass durch die Steuereinrichtung eine Software verarbeitet wird, welche den Beginn einzelner Beiträge durch die Auswertung der Sequenzen des aufgezeichneten Programms selbst erkennt.

Das zuvor charakterisierte System ist dabei so ausgebildet, dass je Programmquelle, deren Programm für eine eventuelle zeitversetzte Wiedergabe von ihr ausgesendeter medialer Beiträge aufgezeichnet wird, ein entsprechender Speicherbereich reserviert wird. Das heißt selbstverständlich nicht, dass für jede derartige Programmquelle ein eigenes Speichermedium angeordnet sein muss. Vielmehr können auf einem Speichermedium mehrere, voneinander unabhängig ansprechbare beziehungsweise behandelte Speicherbereiche zur Aufzeichnung des jeweiligen Programms unterschiedlicher Programmquellen reserviert und als FIFO-Speicher organisiert sein. Dies ist letztlich lediglich eine Frage der logischen Speicherorganisation. In Abhängigkeit des insgesamt für die Programmaufzeichnung zur Verfügung stehenden Speichers und der Anzahl verfügbarer Programmquellen kann dabei gegebenenfalls die Aufzeichnung der Programme aller empfangbaren Programmquellen ermöglicht sein. Vorzugsweise wird die erfindungsgemäße Lösung jedoch, im Hinblick auf den gegebenenfalls limitierten Speicherplatz oder zur Begrenzung des erforderlichen Speicherplatzes sowie im Hinblick auf die große Zahl verfügbarer Sender beziehungsweise Programmquellen, so ausgebildet sein, dass lediglich eine Aufzeichnung des Programms und eine zeitversetzte Wiedergabe darin enthaltener Beiträge für als Favoriten durch den Nutzer festzulegende Programmquellen ermöglicht ist.

Die Aufzeichnung des Programms einer oder mehrerer Programmquellen und die damit verbundene Erkennung des Beginns einzelner medialer Beiträge können in Abhängigkeit der konkreten Ausgestaltung des erfindungsgemäßen Verfahrens lokal, das heißt innerhalb der Endgeräteanordnung, oder mit Hilfe entsprechender, netzbasierter Einrichtungen erfolgen. Demgemäß sind die Speichermittel mit dem zur Programmaufzeichnung reservierten Speicherbereich, der Zeigerspeicher zur Speicherung der jeweils aktuellen Schreibadresse, der Adressspeicher zur Speicherung der mindestens einen Speicheradresse eines Beitragsbeginns und die Steuereinrichtung mit der Software zur Erkennung des Beginns eines medialen Beitrags sowie zur Steuerung des Zusammenwirkens der übrigen Einheiten beziehungsweise des Zugriffs auf die einzelnen Speicher und Speicherbereiche entweder lokal, als Bestandteile der Endgeräteanordnung oder als Teil von innerhalb eines Netzwerks angeordneten Einrichtungen ausgebildet.

Im letztgenannten Fall können die entsprechenden Speicher und Mittel zur Durchführung des Verfahrens als Bestandteile von Einrichtungen eines als Programmquelle fungierenden Senders ausgebildet sein. Denkbar ist es darüber hinaus aber auch, dass die entsprechenden Speicher und die Mittel zur Beitragserkennung als Bestandteile von Einrichtungen eines Serviceanbieters ausgebildet sind, welcher die Programme mehrerer Programmquellen aufzeichnet und darin enthaltene mediale Beiträge zur zeitversetzten Wiedergabe bereitstellt. In diesem Falle sind die einzelnen Speicher (für die Aufzeichnung reservierter Speicherbereich, Zeigerspeicher und Adressspeicher) je einmal (das heißt, zumindest bezogen auf die logische Speicherorganisation je einmal) pro durch den Serviceanbieter unterstützter Programmquelle vorgesehen. In jedem Falle verfügt aber die Endgeräteanordnung auch entsprechend der beiden letztgenannten Ausbildungsvarianten des Systems über einen eigene Steuereinrichtung, welche die Bedienhandlungen eines Nutzers der Endgeräteanordnung interpretiert und die Endgeräteanordnung beziehungsweise deren Geräte oder Elemente zur Ausführung der durch die Bedienhandlung aufgerufenen Funktionen ansteuert. Zur zeitversetzten Wiedergabe eines aufgezeichneten Beitrags, welche im Ergebnis der Auswertung einer entsprechenden Bedienhandlung eines Nutzers erfolgt, interagiert die vorgenannte Steuereinrichtung der Endgeräteanordnung mit der Steuereinrichtung des Senders beziehungsweise des die Aufzeichnung und zeitversetzte Wiedergabe der Programme mehrerer Programmquellen ermöglichenden Serviceanbieters.

Unabhängig davon, ob wesentliche Einheiten respektive Speicher (reservierter Speicherbereich, Zeigerspeicher und Adressspeicher) und die Mittel zur Steuerung des Zugriffs auf diese Speicher lokal, das heißt als Bestandteile der Endgeräteanordnung angeordnet oder netzbasiert, das heißt als Bestandteile der Einrichtungen eines Senders (Programmquelle) oder eines Serviceanbieters vorgesehen sind, kann das System noch um einen weiteren zusätzlichen Speicher ergänzt sein, in welchem Beiträge des laufenden Programms oder zeitversetzt wiedergegebene Beiträge einer Programmquelle archiviert werden können.

Nachfolgend sollen Ausführungsbeispiele für die Erfindung gegeben und anhand von Zeichnungen erläutert werden. Die zugehörigen Zeichnungen zeigen im Einzelnen:
- Fig. 1:: eine mögliche Ausbildungsform des Systems mit lokaler Speicherung des Programms eine Programmquelle,
- Fig. 2:: eine erste netzbasierte Ausbildungsform des Systems,
- Fig. 3:: eine gegenüber der Fig. 2 alternative Ausbildungsform eines netzbasierten Systems,
- Fig. 4:: eine weitere mögliche Ausbildungsform eines netzbasierten Systems.

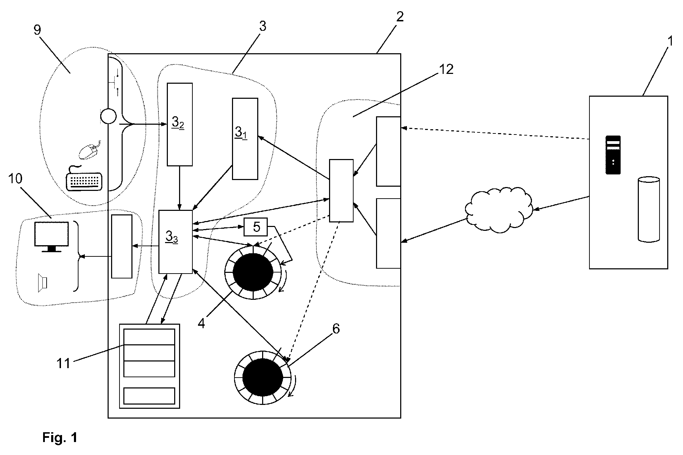

Die Fig. 1 zeigt beispielhaft eine mögliche Ausbildungsform des erfindungsgemäßen Systems, bei welcher das Programm einer Programmquelle 1, nämlich eines das Programm aussendenden beziehungsweise abstrahlenden Senders, lokal, das heißt in Speichermitteln einer auch der Wiedergabe ausgesendeter medialer Beiträge dienenden Endgeräteanordnung 2 gespeichert wird. Demgemäß besteht das System aus der schon genannten Programmquelle 1, im Beispiel aus einem das Programm auf konventionellem Wege, nämlich beispielsweise terrestrisch oder über Satellit, vorzugsweise als digitales Sendesignal und/oder über ein Kommunikationsnetz, wie beispielsweise das Internet, im Wege des Streaming aussendenden Sender sowie der ebenfalls schon genannten Endgeräteanordnung 2. Bei Letzterer kann es sich um ein einzelnes Endgerät oder um eine bei einem Nutzer angeordnete Gruppe von Endgeräten beziehungsweise Einheiten zur unmittelbaren oder zeitversetzten Wiedergabe des durch die Programmquelle 1 ausgesendeten Programms, einschließlich darin enthaltener medialer Beiträge, handeln. Wesentliche Elemente dieser Endgeräteanordnung 2 sind neben den Mitteln 12 zum Empfang eines medialen Datenstroms mindestens einer Programmquelle 1, neben Mitteln 10 zur akustischen und/oder visuellen Wiedergabe medialer Beiträge (Lautsprecher, Display beziehungsweise Bildschirm und dergleichen) und Bedienelementen 9 zur Bedienung der Endgeräteanordnung (Fernbedienung, Tastatur, Maus, berührungsempfindlicher Bildschirm oder Mikrofon und dergleichen), insbesondere Mittel zur Speicherung des von der Programmquelle 1 empfangenen Programms für eine zeitversetzte Wiedergabe darin enthaltener medialer Beiträge sowie eine das Zusammenwirken aller vorgenannten Einheiten steuernde Steuereinrichtung 3. Selbstverständlich gehören darüber hinaus entsprechende Interfaces beziehungsweise Empfangseinheiten für das von der Programmquelle 1 ausgesendete Programm zu der Endgeräteanordnung.

Zur Aufzeichnung des Programms einer oder mehrerer Programmquellen ist ein erster Speicher vorgesehen, in welchem je zur Aufzeichnung ihres Programms vorgesehener Programmquelle 1 ein als FIFO-Speicher organisierter Speicherbereich 4 reserviert ist. Aufgrund seiner Ausbildung als FIFO-Speicher stellt dieser reservierte Speicherbereich 4 gewissermaßen einen Ringpuffer definierter Größe dar, in welchem das von der jeweiligen Programmquelle 1 ausgesendete Programm unabhängig davon aufgezeichnet wird, ob die betreffende Programmquelle 1 mittels der Endgeräteanordnung 2 augenblicklich für die Wiedergabe ihres aktuellen Programms ausgewählt ist. Eine Aufzeichnung des Programms der betreffenden Programmquelle 1 erfolgt dabei zumindest im Einschaltzustand oder im Standby-Betrieb der Endgeräteanordnung 2, ohne dass es hierzu weiterer beziehungsweise zu diesem Zweck erfolgender spezieller Bedienhandlungen des Nutzers bedarf.

In diesem Zusammenhang sei nochmals darauf hingewiesen, dass im Einschaltzustand nicht zwingend die (beispielhaft gezeigte) eine oder eine von mehreren möglichen Programmquellen zur Wiedergabe des gerade ausgesendeten Programms ausgewählt sein muss, sondern die Endgeräteanordnung 2 durch einen Nutzer auch nur eingeschaltet worden sein könnte, um bereits früher aufgezeichnete Inhalte beziehungsweise Beiträge wiederzugeben. Unabhängig davon erfolgt aber im Hintergrund die Aufzeichnung des Programms der einen beziehungsweise gegebenenfalls die Aufzeichnung des Programms mehrerer Programmquellen 1, für welche dies vorgesehen ist. Im letztgenannten Fall, bei welchem beispielsweise eine Aufzeichnung des Programms von zehn oder mehr als Favoriten ausgewählten (hier nicht gezeigten) Programmquellen 1 mittels der Endgeräteanordnung 2 ermöglicht ist, umfasst diese eine entsprechende Anzahl dafür reservierter, jeweils als FIFO-Speicher ausgebildeter Speicherbereiche 4. Dies schließt indes nicht aus, dass physisch nur ein Speichermedium vorgesehen ist, auf welchem durch eine entsprechende logische Verwaltung mehrere derartige Speicherbereiche 4 für die Programmaufzeichnung reserviert sind. Die einzelnen Sender beziehungsweise Programmquellen 1 werden dabei anhand einer von ihnen mit dem Programm beziehungsweise den Beiträgen übertragenen Senderkennung unterschieden, mittels welcher dann der jeweils für die Aufzeichnung zu verwendende reservierte Speicherbereich 4 bestimmt wird.

Ein weiterer zur Steuereinrichtung 3 der Endgeräteanordnung gehörender beziehungsweise durch diese und eine von ihr verarbeitete Software realisierter Bestandteil der Endgeräteanordnung 2 sind Mittel 3₁ zur Auswertung von Signalen einer Programmquelle 1, deren Programm in einem dafür reservierten Speicherbereich 4 aufgezeichnet wird, nach Merkmalen, welche den Beginn eines Beitrages kennzeichnen. Vorzugsweise handelt es sich bei diesen Merkmalen um von der jeweiligen Programmquelle 1 zusammen mit dem aufzuzeichnenden Programm ausgesendete zusätzliche Daten, welche Angaben über den zeitlichen Beginn einzelner Beiträge enthalten. Zu der Steuereinrichtung gehören ferner Mittel 3₂ zur Eingabeverarbeitung sowie eine insbesondere die Programmanwendung (beziehungsweise App) verarbeitende Informationsmanagementkomponente 3₃.

Zu einem in dem dafür reservierten Speicherbereich 4 aufgezeichneten Programm 1 wird in einem ebenfalls als Bestandteil der Endgeräteanordnung 2 vorgesehenen Zeigerspeicher 5 die jeweils aktuelle mit dem medialen Datenstrom des Programms beschriebene Adresse des reservierten Speichers 4 als Schreibadresse vermerkt. Wird nun bei der Aufzeichnung des Programms einer beziehungsweise im Beispiel der einen Programmquelle 1 anhand der vorgenannten Merkmale ein Beitragsbeginn erkannt, so wird die augenblicklich in dem Zeigerspeicher 5 vermerkte aktuelle Schreibadresse in einen gesonderten, dafür vorgesehenen Adressspeicher 6 kopiert. In dem gezeigten Beispiel ist dieser Adressspeicher 6 zur Aufnahme mehrerer, jeweils einen Beitragsbeginn innerhalb des in dem reservierten Speicherbereich 4 aufgezeichneten Programms bezeichnender Adressen ausgebildet, wobei er ebenfalls als FIFO-Speicher organisiert ist. Dabei wird in einem weiteren, ebenfalls in einem (nicht gezeigten) Arbeitsspeicher oder in einem Register der Endgeräteanordnung gehaltenen (ebenfalls nicht gezeigten) weiteren Zeigerspeicher eine Adresse gehalten, welche jeweils auf diejenige Adresse in dem als FIFO-Speicher organisierten Adressspeicher 6 verweist, unter welcher zuletzt die Adresse eines Beitragsbeginns in dem reservierten Speicherbereich 4 vermerkt wurde.

Wählt ein Nutzer der Endgeräteanordnung 2 nun aus einem Favoritenspeicher oder aus einem anderen Programm heraus eine Programmquelle 1 zur Wiedergabe ihres aktuell ausgesendeten Programms aus und richtet er an die Endgeräteanordnung 2 anschließend oder zu einem späteren Zeitpunkt durch einen weiteren Bedienvorgang eine Wiedergabeanforderung, so ist es ihm möglich, unabhängig vom Zeitpunkt der Auswahl der Programmquelle 1 einen bereits laufenden, ihn interessierenden medialen Beitrag zeitversetzt mit dessen Beginn, zumindest aber ab dem frühesten in dem reservierten Speicherbereich 4 verfügbaren Zeitpunkt wiederzugeben. Die Ausgabe des aktuell ausgesendeten Programms über die Mittel 10 zur Ausgabe (und nur die Ausgabe) wird in diesem Falle unterbrochen und stattdessen der in dem Speicherbereich 4 zu dem ausgewählten Beitrag abgelegte mediale Datenstrom aus dem Speicherbereich 4 abgerufen und über die Ausgabemittel 10 ausgegeben. Im Zusammenhang damit ist es dem Nutzer bei dem gezeigten Ausführungsbeispiel durch eine entsprechende Bedienhandlung zudem möglich, einen wiedergegebenen Beitrag zum Zwecke einer erneuten späteren Wiedergabe in einem gesonderten Speicherbereich 11 nochmals parallel abzulegen.

Darüber hinaus können aber auch Beiträge, welche aufgrund entsprechender Bedienhandlungen des Nutzers aus dem Ringpuffer beziehungsweise aus dem reservierten Speicherbereich 4 wiedergegeben werden, in diesem reservierten Speicherbereich 4 durch eine Zusatzinformation, zum Beispiel durch das Setzen eines kennzeichnenden Bits in Metadaten des Beitrages markiert werden. Dies kann in Kombination mit in Metadaten enthaltenen Beitragskennungen dazu genutzt werden, dass bei wiederholter Sendung des gleichen Beitrages (beispielsweise eines Musiktitels) mit gleicher Beitragskennung und erneuter Anforderung der Wiedergabe dieses Beitrages aus dem für die Aufzeichnung der ihn aussendenden Programmquelle 1 reservierten Speicherbereich 4 der gegebenenfalls in dem Ringpuffer beziehungsweise in dem reservierten Speicherbereich 4 für eine andere Programmquelle 1 schon vorhandene Beitrag automatisch in den zuvor genannten gesonderten Speicherbereich 11 für eine parallele Ablage übertragen wird, wenn jener Beitrag durch die genannte Zusatzinformation als schon einmal vom Nutzer abgefordert gekennzeichnet ist.

Die für die Auswahl der Programmquelle 1 und die Auslösung einer Wiedergabeanforderung jeweils erforderlichen Bedienvorgänge werden durch den Nutzer mit Hilfe der dafür vorgesehenen Eingabemittel 9 ausgeführt und durch die Steuereinrichtung 3 der Endgeräteanordnung 2 interpretiert, welche dann auch die Ausführung der jeweils gewünschten Funktion veranlasst. Während der nach einer entsprechenden Wiedergabeanforderung erfolgenden zeitversetzten Wiedergabe eines Programmbeitrags (medialen Beitrags) wird die Aufzeichnung des Programms der entsprechenden Programmquelle 1 fortgesetzt.

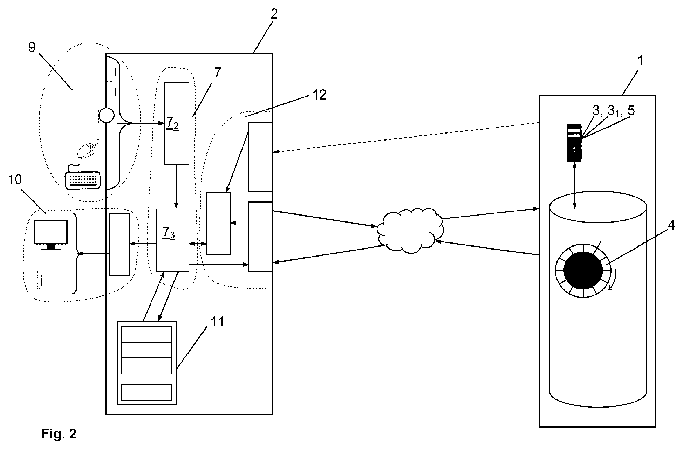

Abweichend gegenüber der zuvor erläuterten Ausbildungsform des vorgeschlagenen Systems erfolgt die Aufzeichnung des Programms der mindestens einen Programmquelle 1 bei der in der Fig. 2 gezeigten Ausbildungsform an zentraler Stelle, nämlich bei der das Programm aussendenden Programmquelle 1 beziehungsweise dem Sender selbst. Demgemäß ist der dazu erforderliche Speicher mit dem für die Aufzeichnung reservierten Speicherbereich 4 bei dieser Ausbildungsform Bestandteil senderseitig beziehungsweise seitens der Programmquelle 1 ausgebildeter Einrichtungen. Dies gilt ebenso für die Mittel 3₁ zur Erkennung eines Beitragsbeginns als Teil der eine entsprechende Software verarbeitenden Steuereinrichtung 3, welche beispielsweise in Form eines zu den senderseitigen Einrichtungen gehörenden Servers ausgebildet ist. In dem dargestellten Beispiel ist auch der Zeigerspeicher 5 in diesem Server realisiert, welcher gegebenenfalls darüber hinaus dazu dient, Programminhalte im Wege des Streaming über das Netzwerk auszusenden. Beispielhaft gezeigt ist eine Ausbildungsform, bei der auf den Adressspeicher verzichtet wird und mit dem Datenstrom des aufgezeichneten Programms Merkmale zur Kennzeichnung eines Beitragsbeginns aufgezeichnet werden. Ein solches, einen Beitragsbeginn kennzeichnendes Merkmal wird beispielsweise durch in dem Server angeordneten Mittel 3₁ generiert, welche die Auswertung des aufzuzeichnenden Programms auf das Vorhandensein eines Beitragsbeginns vornehmen. Die Übermittlung einer Senderkennung zum Zweck der späteren Auswahl eines zeitversetzt wiederzugebenden Beitrags ist hierbei nicht erforderlich, da selbstverständlich bei dieser Ausbildungsform der Sender beziehungsweise die Programmquelle 1 unmittelbar definiert ist.

Zumindest dann, wenn das System lediglich die zeitversetzte Wiedergabe eines laufenden Beitrags ermöglicht, ist zudem die Übermittlung einer Beitragskennung durch die Programmquelle 1 und deren Aufzeichnung in Zuordnung zu dem Merkmal für den Beitragsbeginn ebenfalls entbehrlich, da der zeitversetzt wiederzugebende Beitrag durch den Zeitpunkt des Eingangs einer Wiedergabeanforderung von einer beziehungsweise von der Endgeräteanordnung 2 definiert ist.

Die zu dem beispielhaft gezeigten System gehörende Endgeräteanordnung 2 verfügt selbstverständlich auch hier über Mittel 10 zur akustischen und/oder visuellen Ausgabe medialer Beiträge, welche in Echtzeit, das heißt durch Ausgabe des aktuell durch die Programmquelle ausgesendeten Programms, oder zeitversetzt erfolgen kann. Ferner sind Bedienelemente 9 der Endgeräteanordnung 2, Mittel 12, nämlich Empfangseinheiten zum Empfang des von der beziehungsweise einer Programmquelle 1 ausgesendeten laufenden Programms oder eines von ihr zeitversetzt übermittelten Beitrags Bestandteile des Endgeräteanordnung 2.

Hierbei verfügt die Endgeräteanordnung 2 sowohl über Empfangsmittel 12 zum Empfang eines über konventionelle Wege (terrestrisch oder Satellit) übertragenen Programms als auch über solche zum Empfang eines über ein Kommunikationsnetzwerk übertragenen laufenden Programms oder über ein solches Netzwerk übertragener zeitversetzt wiedergegebener medialer Beiträge. Das Zusammenspiel der vorgenannten Geräte beziehungsweise Einheiten der Endgeräteanordnung 2 wird durch eine ebenfalls zu dieser gehörende Steuereinrichtung 7 gesteuert, welche auch die Mittel 7₂ zur Eingabeverarbeitung sowie die Informationsmanagementkomponente 7₃ umfasst. Durch diese wird auch im Falle einer entsprechenden Bedienhandlung des Nutzers eine Wiedergabeanforderung zur zeitversetzten Wiedergabe eines senderseitig aufgezeichneten Beitrags generiert und an den entsprechenden Sender beziehungsweise die entsprechende Programmquelle 1, das heißt an die dort angeordnete Steuereinrichtung 3 übermittelt. Die in der Fig. 2 als Teil des dargestellten Systems gezeigte Endgeräteanordnung 2 verfügt zusätzlich noch über einen gesonderten Speicherbereich 11 mit einem Datenpuffer, in welchem Beiträge des laufenden Programms oder zeitversetzt von der Programmquelle übertragene Beiträge archiviert werden können. Auch die diesbezüglich erforderlichen Funktionen werden durch die Steuereinrichtung 7 der Endgeräteanordnung 2 gegebenenfalls in Interaktion mit der Steuereinrichtung 3 gesteuert.

Zur zeitversetzten Wiedergabe eines bereits laufenden Beitrags der Programmquelle betätigt der Nutzer ein entsprechendes Bedienelement 9. Die Steuereinrichtung 7 der Endgeräteanordnung 2 generiert daraufhin eine Wiedergabeanforderung und übermittelt diese durch entsprechende Ansteuerung von Sendemitteln in einem vereinbarten Format als Download- oder Streaminganforderung zum Beispiel über das Internet an die (aktuell ausgewählte) aktuelle Programmquelle 1 beziehungsweise den Sender. Falls es sich bei dieser Programmquelle 1 um einen Sender handelt, der sein Programm in Form eines Livestreams überträgt, ist in einem (nicht dargestellten) Speicher der Endgeräteanordnung 2 eine entsprechende Internetadresse für die Programmquelle 1 vermerkt. Wird der laufende Beitrag von einer Programmquelle 1 ausgestrahlt, deren Programm von der Endgeräteanordnung 2 über einen konventionellen Empfangsweg - zum Beispiel terrestrisch - empfangen wird, kann eine Zugriffsadresse in digitalen Zusatzinformationen (RDS, Videotext und dergleichen) enthalten sein, welche die Programmquelle 1 parallel zum Programm aussendet. In diesem Fall können auch beitragsabhängig unterschiedliche Zugriffsadressen übermittelt werden, die dann vom Empfänger dekodiert und ausgewertet werden. Auch ist es möglich, dass der Nutzer der Endgeräteanordnung 2 den Programmquellen 1 (zum Beispiel den Favoritensendern) zugeordnete Adressen manuell mit Hilfe der auf dem Endgerät implementierten Software in den Speicher eingetragen, oder über das Internet herunterladen kann. Im letztgenannten Fall ist auch ein automatisches Laden anhand der eingestellten oder übermittelten Sendernamen und daraus generierter URI (Uniform Resource Identifier) oder IP-Adressen möglich.

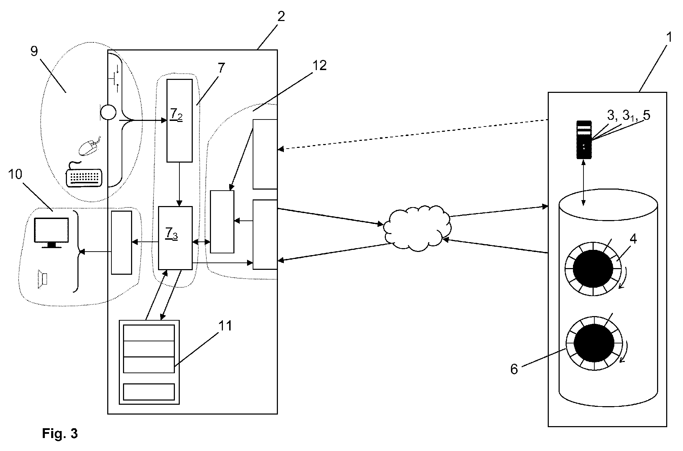

Die Fig. 3 zeigt eine mit der Fig. 2 vergleichbare Ausbildungsform des erfindungsgemäßen Systems, bei welchem die Aufzeichnung des laufenden Programms und die zeitversetzte Bereitstellung medialer Beiträge ebenfalls durch senderseitig, also bei der Programmquelle 1, angeordnete Einrichtungen erfolgt. Abweichend von der in der Fig. 2 gezeigten Ausbildungsform arbeitet die in der Fig. 3 gezeigte mit einem Adressspeicher 6, in welchem mehrere, jeweils auf einen Beitragsanfang in dem als Ringspeicher organisierten reservierten Speicherbereich 4 abgelegt werden können. Dabei ist der entsprechende Adressspeicher 6 ebenfalls als FIFO-Speicher beziehungsweise Ringpuffer organisiert. Im Übrigen entspricht die Ausbildungsform des in der Fig. 3 gezeigten Systems dem System gemäß der Fig. 2.

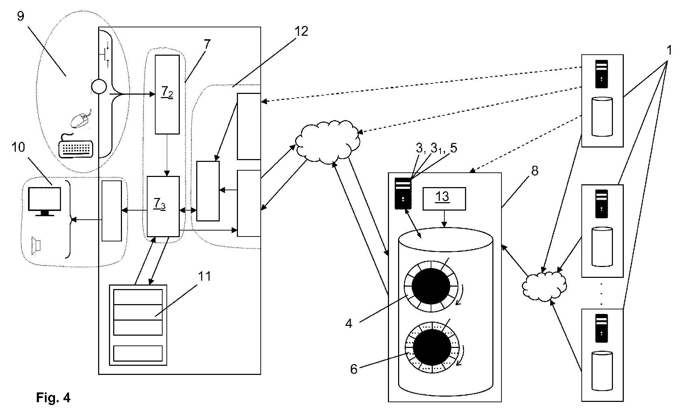

Mit dem in der Fig. 3 gezeigten System wiederum vergleichbar ist die in der Fig. 4 gezeigte weitere Ausbildungsform des erfindungsgemäßen Systems. Diese Ausbildungsform unterscheidet sich von der in der Fig. 3 im Wesentlichen dadurch, dass die Speichermittel, nämlich der Speicher mit dem als FIFO-Speicher organisierten reservierten Speicherbereich 4 für die Programmaufzeichnung und ein Adressspeicher 6 zur Speicherung von Adressen zu Beitragsanfängen des in dem vorgenannten Speicherbereich 4 bezeichneten Programms, in logisch zwischen der Endgeräteanordnung 2 und der Programmquelle 1 angeordneten Einrichtungen 8 eines Dienstleistungsanbieters untergebracht sind. Dabei ist, wie in der Zeichnung dargestellt, die Möglichkeit eröffnet, dass in den Speichermitteln der betreffenden Einrichtungen 8 dieses Dienstleistungsanbieters die Programme mehrerer Programmanbieter beziehungsweise Programmquellen 1 permanent aufgezeichnet werden. Zur Unterscheidung der einzelnen aufgezeichneten Programme wird von den diese aussendenden Programmquellen 1 an den Dienstleistungsanbieter jeweils eines Senderkennung mit übermittelt, welche von diesem zur logischen Steuerung der Aufzeichnungs- und Wiedergabevorgänge verarbeitet wird. Da der Dienstleistungsanbieter die Sender beziehungsweise Programmquellen 1, deren Programm aufgezeichnet wird, selbst bestimmt, kann er entsprechende Senderkennungen auch selbst vergeben und diese vor der Aufzeichnung eines jeweiligen Programms durch seine dafür ausgebildeten technischen Einrichtungen 8 in den entsprechenden medialen Datenstrom einfügen lassen. Bestandteil der Einrichtungen 8 sind ferner Mittel 13 zum Empfang der medialen Daten von den Programmquellen 1.

Allen in den Figuren 1 bis 4 gezeigten Ausführungsbeispielen gemeinsam ist die Verwendung mindestens eines als FIFO-Speicher beziehungsweise Ringpuffer organisierten reservierten Speicherbereiches 4 für die Aufzeichnung des Programms mindestens einer Programmquelle 1.

Soweit das jeweilige System, wie die Ausführungsbeispiele nach den Fig. 1, Fig. 3 und Fig. 4, für die Aufzeichnung nicht nur eines jeweils laufenden Beitrags der betreffenden Programmquelle 1 ausgebildet ist, sondern zur Aufzeichnung mehrerer Beiträge, für welche die Adresse ihres Anfangs innerhalb des zur Aufzeichnung verwendeten reservierten Speicherbereichs 4 in einem Adressspeicher 6 vermerkt wird, ist auch dieser Adressspeicher 6 als FIFO-Speicher beziehungsweise Ringpuffer organisiert.

Im Allgemeinen sind Ringpuffer darauf ausgerichtet, laufend Informationen in einen begrenzten Speicherbereich zu schreiben, welche danach asynchron ausgelesen und verarbeitet werden. Dafür werden neu eintreffende Daten auf den Speicherbereich geschrieben, auf den ein in einem Zeigerspeicher, nämlich im allgemeinen Arbeitsspeicher oder einem Register gehaltener Adresszeiger (In-Pointer) verweist. Ein gegebenenfalls weiterer in diesem Speicher gehaltener Adresszeiger (Out-Pointer) verweist auf den Beginn der Daten, die aus dem Ringpuffer noch nicht ausgelesen und freigegeben wurden. Ein Pufferüberlauf ist dann erreicht, wenn der In-Pointer den Out-Pointer einholt. Ein Out-Pointer wird üblicherweise genutzt, um Daten in der Reihenfolge ihres früheren Eintreffens aus einem Speicher wieder auszulesen und der weiteren Verarbeitung zuzuführen. Im Rahmen der Erfindung hat der Out-Pointer jedoch eine andere Funktion. Hier ist der Out-Pointer lediglich ein einfacher, beim Abruf eines Beitrags zu dessen zeitversetzter Wiedergabe auf den Anfang des Beitrags oder auf den frühesten im Speicher verfügbaren Zeitpunkt des Beitrags gesetzter Lese-Pointer. Dieser Pointer wird dabei zum Auslesen benötigt, ohne dass jedoch hierbei eine Prüfung auf einen eventuellen Pufferüberlauf erfolgt.

Bei der vorgestellten Lösung gemäß der Erfindung werden die neu eintreffenden Daten des medialen Datenstroms des aufgezeichneten Programms zwar auf den Speicherbereich geschrieben, auf den ein in einem Zeigerspeicher gehaltener Adresszeiger, nämlich ein In-Pointer verweist, jedoch ist dabei kein Out-Pointer in dem eingangs des vorhergehenden Abschnitts beschriebenen Sinn vorgesehen. Das heißt, es wird nicht überwacht, ob im Zuge der fortgesetzten Aufzeichnung von Daten des medialen Datenstroms bestimmte Bereiche des Ringpuffers überschrieben werden, die eventuell noch nicht ausgelesen wurden. Hat der Ringpuffer eine zwar definierte, aber ausreichende Größe, die es erlaubt zum Beispiel mehrere Stunden Mediendaten (zum Beispiel Video oder Musik) aufzuzeichnen, so kann im Allgemeinen davon ausgegangen werden, dass mehrere Beiträge gespeichert werden können. Dabei werden alle als Teil des empfangenen Programms aufgezeichneten Beiträge, bei denen ein Playback (zeitversetzte Wiedergabe) in der beschriebenen Form gestattet sein soll, in den für die Aufzeichnung reservierten Speicherbereich beziehungsweise Ringpuffer nahezu in Echtzeit, das heißt parallel zu ihrem Eintreffen bei den zu ihrer Aufzeichnung sowie zur Steuerung dieser Aufzeichnung vorgesehenen Einheiten, übertragen.

Um die Erkennung eines Beitragsanfangs zu ermöglichen, können in den Zusatzdaten der Sender (Programmquellen) Beitragskennungen enthalten sein, die mit jedem neuen Beitrag wechseln. Wird durch die den Zugriff auf die Speichermittel für die Programmaufzeichnung steuernde Steuereinrichtung nun ein Wechsel der Beitragskennung festgestellt, so wird die zu diesem Zeitpunkt aktuelle, in dem Zeigerspeicher vermerkte Schreibadresse des in dem reservierten Speicherbereich erfolgenden Aufzeichnungsvorgangs beziehungsweise - gemäß vorstehender Diktion - des In-Pointers (oder ein davon zum Beispiel durch Addition/Subtraktion eines festgelegten zweiten Wertes funktional abgeleiteter Wert) in den dem Vermerk von Anfangsadressen gespeicherter Beträge dienenden Adressspeicher eingetragen. Dabei wird der Wert eines weiteren in einem Arbeitsspeicher des Systems gehaltenen, auf den Adressspeicher mit den Adressen der Beitragsanfänge verweisenden Zeiger beziehungsweise eines weiteren In-Pointers vor den zuletzt im Adressspeicher vorgenommenen Eintrag gesetzt. Der letztgenannte weitere Zeiger/In-Pointer verweist demnach innerhalb des Adressspeichers immer auf die darin zuletzt für einen Beitragsbeginn gespeicherte, sich auf den für die Aufzeichnung reservierten Speicherbereich beziehende Adresse. Diese ist die Anfangsadresse des augenblicklich laufenden Beitrags in dem aufgezeichneten Programm.

Abweichend von den zuletzt gegebenen Erläuterungen arbeitet das Ausführungsbeispiel gemäß der Fig. 2, wie bereits ausgeführt, nicht mit einem speziellen Adressspeicher 6 zur Ablage der Anfangsadressen von Beiträgen innerhalb des reservierten Speicherbereichs 4 mit dem aufgezeichneten Programm. Ein gesonderter, gegebenenfalls auch als Ringpuffer ausgebildeter Adressspeicher 6 ist insoweit entbehrlich. Stattdessen wird eine Anfangskennung (und gegebenenfalls zusätzlich eine Endekennung) direkt fortlaufend in den als Ringpuffer ausgebildeten, für die Aufzeichnung des Programms reservierten Speicherbereich 4 eingetragen.

Bei fehlender Übermittlung von Beitragskennungen durch den Sender kann die Erkennung eines Beitragswechsels anhand von im empfangenen EPG (Electronic Program Guide) oder anderer Zusatzinformationen der Sender beziehungsweise Programmquellen 1 erfolgen, in denen Zeiten für den Beginn (und gegebenenfalls das Ende) von Beiträgen enthalten sind, wie zum Beispiel Programmtabellen. Auch können im EPG oder in anderen Zusatzinformationen der Sender Bereiche definiert sein, in denen Angaben enthalten sind, die sich auf den jeweils aktuellen Beitrag beziehen. Eine Veränderung dieser Angaben, kann durch die den Aufzeichnungsvorgang steuernde Steuereinrichtung 3 ebenfalls als Beitragswechsel interpretiert werden. Ferner können in der vorgenannten Steuereinrichtung 3 Mustererkennungsverfahren Anwendung finden, die einen Beitragswechsel erkennen, indem sie zum Beispiel Bildszenenwechsel, Wechsel von Musik in Sprache oder umgekehrt in den eintreffenden Audiodaten als Beitragswechsel interpretieren.

Die als Teil des Programms einer Programmquelle 1 aufgezeichneten Beiträge werden demnach in diesem Falle innerhalb des reservierten Speicherbereichs 4 durch von einer Steuereinrichtung 3 beziehungsweise deren Mittel 3₁ generierte Anfangskennungen (Endekennungen) voneinander getrennt, die aus nicht in dem medialen Datenstrom vorkommenden Daten bestehen und am Anfang (Ende) eines Beitrages auf die durch den In-Pointer (aktuelle Schreibadresse innerhalb des reservierten Speicherbereichs) gekennzeichneten Speicherabschnitt geschrieben werden. Die Anfangskennung (oder Endekennung) kann mit einer spezifischen Beitragskennung ergänzt werden, die gegebenenfalls in den vom Sender (von der Programmquelle 1) empfangenen Daten enthalten ist.

Erhält die den Zugriff auf die Speicher managende Steuereinrichtung 3 aufgrund einer entsprechenden Bedienhandlung eine Wiedergabeanforderung für den laufenden Beitrag, so werden die in dem reservierten Speicherbereich 4 gespeicherten Daten des laufenden Beitrages ab Beginn der Aufzeichnung an ein Ausgabeinterface, das heißt an ein Display und/oder Lautsprecher als Bestandteil der Mittel 10 zur Ausgabe übertragen. Der Beginn des laufenden Beitrages kann für den Fall der Benutzung von zusammen mit dem medialen Datenstrom in dem reservierten Speicherbereich 4 aufgezeichneten Anfangskennungen (Endekennungen) durch eine entsprechende Suche der Anfangskennung des Beitrages rückwärts ab der durch die aktuelle Schreibadresse beziehungsweise den In-Pointer gekennzeichneten Speicheradresse gefunden werden und der Beitrag ab hier ausgegeben werden. Wie bereits ausgeführt, wird die Aufzeichnung des Programms der entsprechenden Programmquelle 1/des Senders dabei im Hintergrund fortgesetzt.

Bei Anforderung eines weiter zurückliegenden Beitrages wird anhand der übermittelten Beitragskennung oder der im Empfänger ermittelten Anzahl der zurückliegenden Beiträge (zum Beispiel "0" für den laufenden Beitrag, "1" für vorherigen Beitrag usw.) mit Hilfe eines zu dekrementierenden oder auch zu inkrementierenden Suchzeigers (je nach Organisation des als Ringpuffer organisierten Adressspeichers 6) in dem Adressspeicher oder (im Falle der Fig. 2) gemäß der Anzahl der zurückliegenden Beiträge nach zurückliegenden Anfangskennungen in dem reservierten Speicherbereich 4 gesucht. Erreicht der sich verändernde Suchzeiger den Wert des In-Pointers also der aktuellen Schreibadresse so kann von einem Überlauf gesprochen werden. In diesem Fall kann gegebenenfalls ein Fehlercode generiert werden oder der gerade durch den genannten Suchzeiger ausgewählte Beitrag wird gegebenenfalls beginnend inmitten des so ermittelten Beitrages wiedergegeben werden. Auch kann durch die Software festgelegt werden, dass der Suchzeiger wieder in die entgegengesetzte Richtung verändert wird, bis die nächste nicht überschriebene Anfangskennung beziehungsweise die Anfangsadresse des nächsten Beitrags in dem Adressspeicher 6 gefunden wird. Die Benutzung eines Suchverfahrens nach Anfangskennungen innerhalb des für die Programmaufzeichnung reservierten Speicherbereichs 4 beansprucht insbesondere bei einer netzbasierten Ausbildung des Systems (der Aufzeichnungsspeicher mit dem dafür reservierten Speicherbereich 4 ist in Einrichtungen der Programmquelle 1/des Senders oder in Einrichtungen 8 eines Serviceanbieters ausgebildet) und bei einer größeren Anzahl gleichzeitiger Wiedergabeanforderungen durch verschiedene Endgeräteanordnungen 2 die Ressourcen des Senders/des Serviceanbieters sehr stark. Aus diesem Grund wird insbesondere hierbei eine mit zwei Ringpuffern (einerseits reservierter, als FIFO-Speicher organisierter Speicherbereich 4 für die Programmaufzeichnung, andererseits ebenfalls als FIFO-Speicher organisierter Adressspeicher 6) arbeitende Verfahrensvariante bevorzugt.

## Patentansprüche

1. Verfahren zur Aufzeichnung von mindestens einer Programmquelle (1) ausgesendeter medialer Beiträge und zur zeitversetzten Wiedergabe eines solchen, in einem dafür reservierten Speicherbereich (4) aufgezeichneten und von einer dazu ausgebildeten Endgeräteanordnung (2) empfangenen Beitrags, **dadurch gekennzeichnet, dass** das von der mindestens einen Programmquelle (1) als medialer Datenstrom ausgesendete Programm, unabhängig davon, ob diese Programmquelle (1) augenblicklich zur Wiedergabe des von ihr ausgesendeten Programms ausgewählt ist und unabhängig von weiteren Bedienhandlungen eines Nutzers der Endgeräteanordnung (2), durch Speichern in dem dafür reservierten, als FIFO-Speicher organisierten Speicherbereich (4) permanent oder beginnend mit einem Einschaltmoment der Endgeräteanordnung (2) aufgezeichnet wird und dass ein zum Zeitpunkt einer mittels der Endgeräteanordnung (2) erfolgenden Auswahl der mindestens einen Programmquelle (1) zur Wiedergabe ihres Programms bereits laufender medialer Beitrag durch die Endgeräteanordnung (2), unabhängig vom Zeitpunkt dieser Auswahl, zur zeitversetzten Wiedergabe ab dem Beitragsbeginn, zumindest aber ab einem frühesten in dem reservierten Speicherbereich (4) verfügbaren Zeitpunkt bereitgestellt wird.

2. Verfahren nach Anspruch 1, **dadurch gekennzeichnet, dass** parallel die Programme mehrerer Programmquellen (1) aufgezeichnet werden, unabhängig davon, ob eine Programmquelle augenblicklich zur Wiedergabe des von ihr ausgesendeten Programms ausgewählt ist und wenn ja, unabhängig davon, welche Programmquelle dazu ausgewählt ist.

3. Verfahren nach Anspruch 2, **dadurch gekennzeichnet, dass** das Programm jeder der aufzuzeichnenden Programmquellen (1) in einem gesonderten, für die jeweilige Programmquelle (1) reservierten Speicherbereich (4) aufgezeichnet wird.

4. Verfahren nach Anspruch 1 oder 2, **dadurch gekennzeichnet, dass** die Aufzeichnung des Programms der mindestens einen Programmquelle (1) in einem lokal als Bestandteil der Endgeräteanordnung (2) des Nutzers ausgebildeten Speicherbereich (4) erfolgt.

5. Verfahren nach Anspruch 1 oder 2, **dadurch gekennzeichnet, dass** die Aufzeichnung des Programms der mindestens einen Programmquelle (1) in einem Speicherbereich (4) erfolgt, der in Einrichtungen (8) eines Dienstleistungsanbieters oder in zur Programmquelle (1) gehörenden Einrichtungen, nämlich in Einrichtungen des Programmanbieters, ausgebildet ist und auf welchen die Endgeräteanordnung (2) zur Wiedergabe eines aufgezeichneten Beitrags über ein Netzwerk zugreift.

6. Verfahren nach Anspruch 4 oder 5, **dadurch gekennzeichnet, dass** zur Bereitstellung des von der mindestens einen Programmquelle (1) ausgesendeten Beitrags für eine vom Zeitpunkt der Auswahl der Programmquelle (1) unabhängige Wiedergabe
a.) die jeweils augenblicklich mit dem medialen Datenstrom des aufgezeichneten Programms der Programmquelle (1) beschriebene Adresse des reservierten Speicherbereichs (4) als aktuelle Schreibadresse in einem Zeigerspeicher (5) gehalten wird,
b.) Signale der Programmquelle (1), deren Programm gemäß a) aufgezeichnet wird, nach Merkmalen ausgewertet werden, welche den Beginn eines Beitrags kennzeichnen,
c.) bei einem gemäß b) erkannten Beitragsbeginn die in dem Zeigerspeicher (5) gehaltene aktuelle Schreibadresse der Programmaufzeichnung in einen Adressspeicher (6) kopiert wird, wobei aber eine darin zu einem Beitragsanfang vermerkte Adresse aus dem Adressspeicher (6) wieder entfernt wird, sofern die aktuelle Schreibadresse des fortgesetzten Aufzeichnungsvorgangs erneut mit dieser Adresse übereinstimmt,
d.) nach Ausführung einer dafür vorgesehenen Bedienhandlung von der Endgeräteanordnung (2) ein Beitrag, welcher von der zu diesem Zeitpunkt ausgewählten Programmquelle (1) ausgesendet wird, ab der im Adressspeicher (6) für den Beitragsanfang vermerkten Adresse oder, im Falle dessen, dass eine solche Adresse in dem Adressspeicher (6) nicht vermerkt ist, ab der, auf die im Zeigerspeicher (5) vermerkte aktuelle Schreibadresse folgenden, im Zuge des aktuellen Aufzeichnungsvorgangs beschriebenen Adresse des reservierten Speicherbereichs (4) wiedergegeben wird, wobei der Aufzeichnungsvorgang fortgesetzt wird.

7. Verfahren nach Anspruch 6, **dadurch gekennzeichnet, dass** ein oder mehrere sich jeweils auf den Beginn eines Beitrags innerhalb des in dem reservierten Speicherbereich (4) aufgezeichneten Programms beziehende Adressen in dem in diesem Fall ebenfalls als FIFO-Speicher ausgebildeten Adressspeicher (6) vermerkt werden, wobei in einem Arbeitsspeicher ein Zeiger gehalten wird, welcher auf diejenige Adresse des Adressspeichers (6) verweist, unter welcher die zuletzt für einen Beitragsbeginn vermerkte Adresse des für die Programmaufzeichnung reservierten Speichers (4) gespeichert ist.

8. Verfahren nach Anspruch 4 oder 5, **dadurch gekennzeichnet, dass** zur Bereitstellung des von der mindestens einen Programmquelle (1) ausgesendeten Beitrags für eine vom Zeitpunkt der Auswahl der Programmquelle unabhängige Wiedergabe
a.) die jeweils augenblicklich mit dem medialen Datenstrom des aufgezeichneten Programms der Programmquelle (1) beschriebene Adresse des reservierten Speicherbereichs (4) als aktuelle Schreibadresse in einem Zeigerspeicher (5) gehalten wird,
b.) Signale der Programmquelle (1), deren Programm gemäß a) aufgezeichnet wird, nach Merkmalen ausgewertet werden, welche den Beginn eines Beitrags kennzeichnen,
c.) bei einem gemäß b) erkannten Beitragsbeginn unter der, auf die im Zeigerspeicher (5) vermerkte aktuelle Schreibadresse folgenden Adresse des reservierten Speichers (4) ein Kennzeichen für einen Beitragsanfang abgespeichert wird,
d.) nach Ausführung einer dafür vorgesehenen Bedienhandlung von der Endgeräteanordnung (2) ein Beitrag, welcher von der zu diesem Zeitpunkt ausgewählten Programmquelle (1) ausgesendet wird, ab der der Speicheradresse mit dem zuletzt für einen Beitragsbeginn abgelegten Kennzeichen folgenden Speicheradresse oder, im Falle dessen, dass ein solches Kennzeichen nicht in dem reservierten Speicherbereich (4) abgelegt ist, ab der, auf die im Zeigerspeicher (5) vermerkte aktuelle Schreibadresse folgenden, im Zuge des aktuellen Aufzeichnungsvorgangs mit dem aufgezeichneten Programm beschriebenen Adresse des reservierten Speicherbereichs (4) wiedergegeben wird, wobei der Aufzeichnungsvorgang fortgesetzt wird.

9. Verfahren nach Anspruch 6 oder 8, **dadurch gekennzeichnet, dass** es sich bei den auf das Vorhandensein von Merkmalen zur Kennzeichnung eines Beitragsbeginns ausgewerteten Signalen, um Daten mit Zusatzinformationen handelt, welche durch die Programmquelle (1) ausgesendet werden, deren Programm in dem reservierten Speicherbereich (4) aufgezeichnet wird.

10. Verfahren nach Anspruch 1 oder 2, **dadurch gekennzeichnet, dass** das Dateiformat des von der mindestens einen Programmquelle (1) ausgesendeten medialen Datenstroms, während der Aufzeichnung des Programms der betreffenden Programmquelle (1) in ein weniger Speicherplatz erforderndes Dateiformat umgewandelt wird.

11. System zur Aufzeichnung und zeitversetzten Wiedergabe medialer Beiträge, bestehend aus mindestens einer Programmquelle (1) zur Aussendung eines Programms mit medialen Beiträgen in Form eines medialen Datenstroms, aus Mitteln zur Aufzeichnung des von der mindestens einen Programmquelle (1) ausgesendeten Programms und aus einer Endgeräteanordnung (2), welche Bedienelemente (9), Mittel (12) zum Empfang des von der mindestens einen Programmquelle ausgesendeten medialen Datenstroms sowie Mittel (10) zur unmittelbaren oder zeitversetzten akustischen und/oder visuellen Wiedergabe in diesem medialen Datenstrom enthaltener medialer Beiträge aufweist, **dadurch gekennzeichnet, dass** das System ferner Mittel (3₁) zur Erkennung des Beginns eines medialen Beitrags, realisiert mittels einer Steuereinrichtung (3) und einer von dieser verarbeiteten Software zur Auswertung den Beginn eines Beitrags innerhalb des aufgezeichneten Programms kennzeichnender Merkmale, umfasst und dass die vorgenannte Steuereinrichtung (3) während der Programmaufzeichnung und der zeitversetzten Wiedergabe aufgezeichneter Beiträge den Zugriff auf Speichermittel des Systems steuert, in denen je Programmquelle (1), deren mediale Beiträge für eine zeitversetzte Wiedergabe zur Verfügung stehen sollen, ausgebildet sind
a.) ein reservierter, als FIFO-Speicher organisierter Speicherbereich (4) für eine zumindest im Einschaltzustand der Endgeräteanordnung von Bedienungshandlungen eines Nutzers der Endgeräteanordnung und von der augenblicklich zur Programmwiedergabe ausgewählten Programmquelle unabhängige Aufzeichnung des von der mindestens einen Programmquelle (1) ausgesendeten Programms,
b.) ein Zeigerspeicher (5) zur Speicherung der jeweils augenblicklich mit dem medialen Datenstrom beschriebenen Adresse des nach a) reservierten Speicherbereichs als aktuelle Schreibadresse,
c.) ein Adressspeicher (6) zur Speicherung mindestens einer Speicheradresse des für die Programmaufzeichnung reservierten Speicherbereichs (4), unter welcher ein medialer Beitrag innerhalb des in dem Speicherbereich (4) aufgezeichneten Programms beginnt.

12. System nach Anspruch 11, **dadurch gekennzeichnet, dass** die Speichermittel mit dem zur Programmaufzeichnung reservierten Speicherbereich (4), dem Zeigerspeicher (5) zur Speicherung der aktuellen Schreibadresse und dem Adressspeicher (6) zur Speicherung der mindestens einen Speicheradresse sowie die Steuereinrichtung (3) mit den Mitteln (3₁) und der Software zur Erkennung eines Beitragsbeginns als Bestandteile von Einrichtungen eines als Programmquelle (1) fungierenden Senders ausgebildet sind, wobei die Endgeräteanordnung (2) ebenfalls eine Steuereinrichtung (7) aufweist, welche Bedienhandlungen eines Nutzers der Endgeräteanordnung (2) interpretiert und die Endgeräteanordnung (2) zur Ausführung der durch die Bedienhandlung aufgerufenen Funktionen ansteuert und welche zur zeitversetzten Wiedergabe eines aufgezeichneten Beitrags mit der vorgenannten Steuereinrichtung (3) der Programmquelle (1) über ein Netzwerk interagiert.

13. System nach Anspruch 11, **dadurch gekennzeichnet, dass** die Speichermittel mit dem zur Programmaufzeichnung reservierten Speicherbereich (4), dem Zeigerspeicher (5) zur Speicherung der aktuellen Schreibadresse und dem Adressspeicher (6) zur Speicherung der mindestens einen Speicheradresse sowie die Steuereinrichtung (3) mit den Mitteln (3₁) und der Software zur Erkennung eines Beitragsbeginns als Bestandteile von Einrichtungen (8) eines Serviceanbieters ausgebildet sind, welcher Programme mehrerer Programmquellen (1) aufzeichnet und darin enthaltene mediale Beiträge zur zeitversetzten Wiedergabe bereitstellt, wobei die vorgenannten Einheiten, mit Ausnahme der Steuereinrichtung (3), je einmal pro Programmquelle (1) vorgesehen sind, für welche eine zeitversetzte Wiedergabe medialer Beiträge durch die Einrichtungen (8) des Serviceanbieters unterstützt wird und wobei auch die Endgeräteanordnung (2) eine Steuereinrichtung (7) aufweist, welche Bedienhandlungen eines Nutzers der Endgeräteanordnung (2) interpretiert und die Endgeräteanordnung (2) zur Ausführung der durch die Bedienhandlung aufgerufenen Funktionen ansteuert und welche zur zeitversetzten Wiedergabe eines aufgezeichneten Beitrags mit der vorgenannten Steuereinrichtung (3) der Einrichtungen (8) des Serviceanbieters über ein Netzwerk interagiert.

14. Endgeräteanordnung (2) mit Mitteln (12) zum Empfang und Mittel zur Aufzeichnung eines von mindestens einer Programmquelle (1) ausgesendeten medialen Datenstroms, Mitteln (10) zur unmittelbaren oder zeitversetzten akustischen und/oder visuellen Wiedergabe in diesem medialen Datenstrom enthaltener medialer Beiträge und mit Bedienelementen (9), **dadurch gekennzeichnet, dass** die Endgeräteanordnung ferner Mittel (3₁) zur Erkennung des Beginns eines medialen Beitrags umfasst, welche mittels einer Steuereinrichtung (3) und einer von dieser verarbeiteten Software zur Auswertung den Beginn eines Beitrags innerhalb des aufgezeichneten Programms kennzeichnender Merkmale realisiert sind und dass die vorgenannte Steuereinrichtung (3) während der Programmaufzeichnung und der zeitversetzten Wiedergabe aufgezeichneter Beiträge den Zugriff auf Speichermittel des Systems steuert, in denen je Programmquelle, deren mediale Beiträge für eine zeitversetzte Wiedergabe zur Verfügung stehen sollen, ausgebildet sind
a.) ein reservierter, als FIFO-Speicher organisierter Speicherbereich (4) für eine zumindest im Einschaltzustand der Endgeräteanordnung von Bedienungshandlungen eines Nutzers der Endgeräteanordnung und von der augenblicklich zur Programmwiedergabe ausgewählten Programmquelle unabhängige Aufzeichnung des von der mindestens einen Programmquelle (1) ausgesendeten Programms,
b.) ein Zeigerspeicher (5) zur Speicherung der jeweils augenblicklich mit dem medialen Datenstrom beschriebenen Adresse des nach a) reservierten Speicherbereichs (4) als aktuelle Schreibadresse,
c.) ein Adressspeicher (6) zur Speicherung mindestens einer Speicheradresse des für die Programmaufzeichnung reservierten Speicherbereichs (4), unter welcher ein medialer Beitrag innerhalb des in dem Speicherbereich (4) aufgezeichneten Programms beginnt.
